Europäisches Patentamt

European Patent Office

Office européen des brevets

(11) Publication number: **0 212 763 B1**

## EUROPEAN PATENT SPECIFICATION

(45) Date of publication of patent specification: **12.08.92**   (51) Int. Cl.$^5$: **F16L  17/02**

(21) Application number: **86201654.0**

(22) Date of filing: **19.06.84**

(60) Publication number of the earlier application in accordance with Art.76 EPC: **0 145 781**

(54) **Means for sealing the gap between two axially displaceable sealing surfaces.**

(30) Priority: **20.06.83 NO 832235**

(43) Date of publication of application:
**04.03.87 Bulletin  87/10**

(45) Publication of the grant of the patent:
**12.08.92 Bulletin  92/33**

(84) Designated Contracting States:
**AT BE CH DE FR GB LI LU NL SE**

(56) References cited:
**WO-A-81/03214**
**DE-B- 2 325 231**
**FR-A- 1 545 368**

(73) Proprietor: **Forsheda AB**

**S-330 12 Forsheda(SE)**

(72) Inventor: **Haaland, Per**
**Kaptein Oppegaards vei 22**
**N-1152, Oslo 11(NO)**

(74) Representative: **Linde, Leif**
**Vernamo Patentbyra AB, Persegard**
**S-274 00 Skurup(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a gasket of elastic resilient material having a substantially uniform cross-section for sealing a gap between two elements having sealing surfaces which are substantially uniformly spaced.

The gasket according to the invention is of a type comprising a sealing body adapted to be stationary with respect to one of the sealing surfaces during assembly where relative movement of the elements is provided in a direction substantially parallel to the sealing surfaces and transverse to the longitudinal direction of the gasket, and further comprising a hollow jacket defined by a wall having reduced thickness in relation to the sealing body and forming a closed cavity having lubricated surfaces, the hollow jacket being connected with the forward end of the sealing body and being wholly positioned in fornt of the sealing body in the starting position for the assembly by relative movement of the elements, the hollow jacket being adapted at the assembly to roll from the position in front of the sealing body in a manner similar to a caterpillar belt to a position in which the hollow jacket is at least partially positioned between the sealing body and the opposite sealing surface.

W0-A-8103214 discloses a gasket of the above type for pipes having a spigot and a socket end. The gasket comprises a compression member and a surrounding hose. Part of this hose is stationary with respect to the spigot end by being held thereon by the compression member. The remaining part of the hose will move together with the socket end of another pipe while sliding over the compression member. A secondary compression member may be provided outside the hose, and the part of the hose sliding over the main compression member will form a double layer over the secondary compression member, the outer layer of said double layer sliding relatively to the inner layer thereof.

An object of the invention is to provide an improved gasket of the kind described above.

In order to comply with this object there is according to the invention provided a gasket which is characterized in that the hollow jacket defines an empty cavity which is adapted to be flattened with two opposite inner surfaces of said wall contacting each other essentially along their entire length during assembly and in the assembled position in which the jacket is at least partially positioned between the sealing body and the opposite sealing surface.

The invention will be further described in the following in conjunction with the drawing figures which illustrate a conventional gasket as well as embodiments of the gasket according to the present invention.

Figures 1a and 1b illustrate an embodiment of a known annular gasket according to a previous development leading to the present invention, said gasket being adapted for use on the bottom ring of a mold so as to be positioned in a groove in the socket end of the molded pipe.

Figures 2 and 3 illustrate an embodiment of a gasket according to the present invention, Figure 2 depicting the gasket in a position prior to the assembly of the elements, and Figure 3 depicting the gasket after the assembly of, the elements.

Figure 4 illustrates a modification of the embodiment according to Figures 2 and 3.

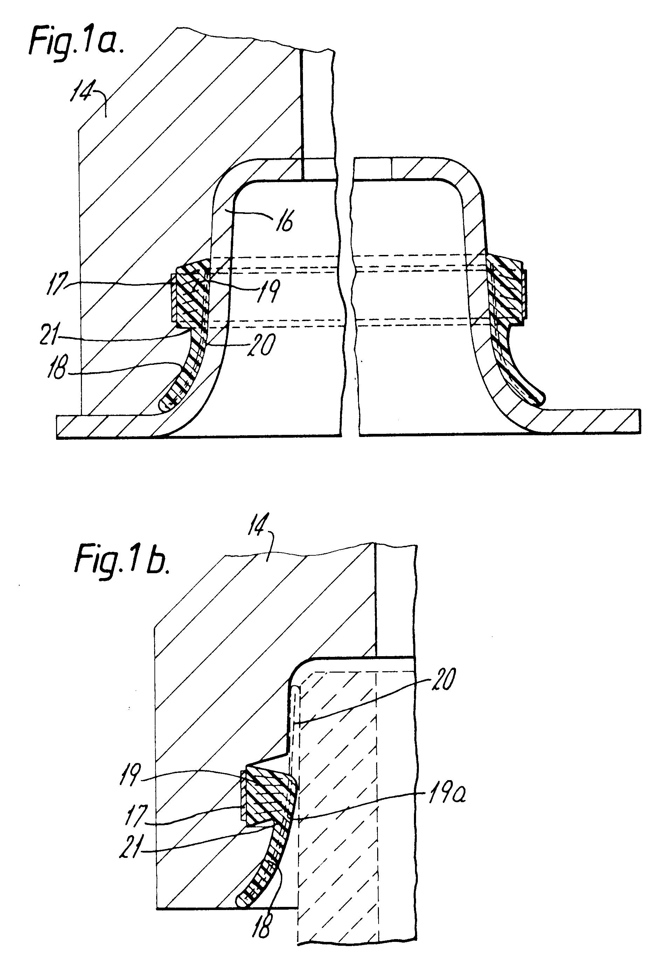

Shown in Figures 1a and 1b is a gasket of a previously known type for example as disclosed in US-A-4,299,399. The gasket comprises a first gasket portion or sealing body 19 and a second gasket portion in the shape of a jacket 18. The gasket is mounted on a bottom ring 16 constituting a part of a mold for a concrete pipe of which only the lower or socket end 14 is illustrated and with which the gasket is to be used. The gasket is mounted on the bottom ring 16 with the jacket 18 facing the ring. After curing of the concrete the ring 16 is removed from the socket 14, whereby the compression of the gasket is released, the gasket taking a shape which is shown in Figure 1b and which is suitable for the introduction of a spigot end 9 of another pipe in the socket 14.

To make the gasket protrude into the cavity of the socket when the ring 16 has been removed, it is compressed onto the bottom ring 16. The compression is obtained by means of a non-stretchable hoop 17.

The use of the known sliding type jacket 18 illustrated in Figures 1a and 1b requires a lubricant to be supplied to the closed cavity defined between the first gasket portion and the sliding jacket 18. During the assembly of the pipe elements 14 and 9, the jacket 18 will slide along the surface 19a of the first gasket portion 19 facing the jacket and enter the gap 20 between the pipes axially inside the first gasket portion 19, forming therein a double buffer layer preventing contact between the coaxial surfaces of the spigot end and the socket.

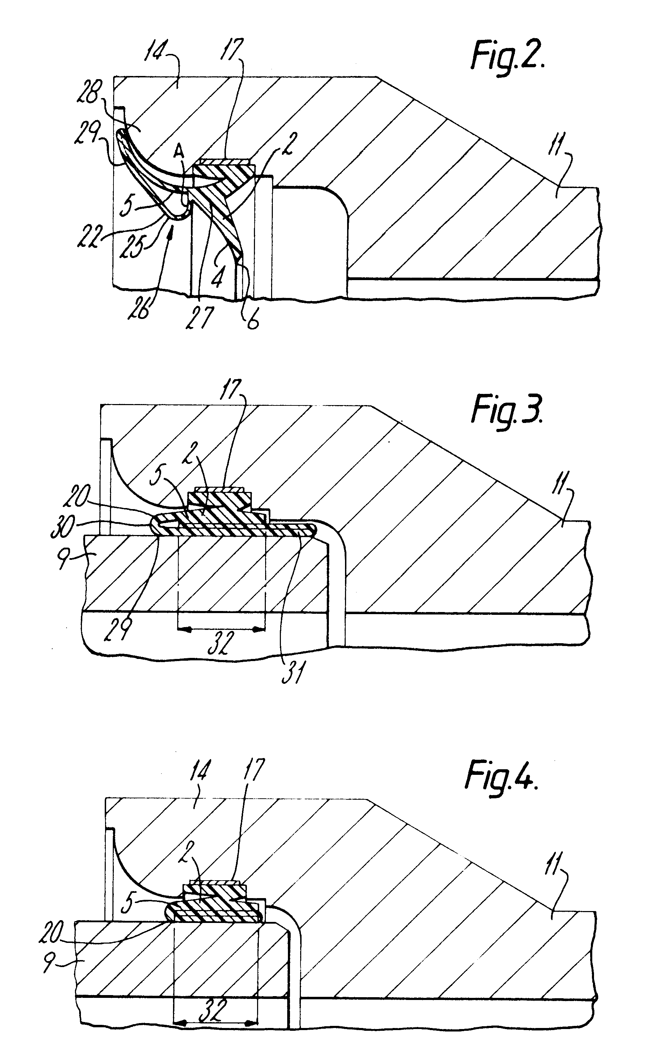

The invention will now be described with reference to Figures 2 and 4.

In particular, Figure 2 illustrates a gasket 2 having a sealing body 19 of Z-shaped cross-section and a reinforcement hoop or ring 17. The gasket also includes a hollow jacket 22 having a cross-section of closed annular shape. This jacket will in the following be referred to merely as being "hollow", which is meant to imply that it surrounds a cavity by being of closed annular cross-sectional shape, said cavity being "empty" to allow the jacket to be flattened with its inner walls contacting each other. The jacket 22 has an increasing thickness, the thickest end being connected to the front edge A of the sealing body, similar to what is the case with respect to the gasket shown in Figures 1a and 1b. The other end of the wall of said jacket 22 is also connected to the front edge A of the sealing body, closely adjacent to, but radially inside said first end 5, and said other end is shaped so as to bulge inwardly as shown at 25. The smallest diameter 26 of the jacket 22 is less that the diameter of the spigot end 9 to be inserted in the socket 14. The jacket 22 flares forwardly and outwardly towards the socket opening. The inner surfaces of the walls of the jacket 22 are provided with locking ribs 29 and with a suitable lubricant.

When a spigot end 9 (Figures 3 and 4) is pushed into the socket 14 and engages said jacket 22 at the bulge 25 thereof, said jacket 22 will be entrained by the pipe and will follow the movement thereof, while forming a double layer over the sealing body, the lubricated inner surfaces of the walls of the jacket 22 sliding along each other. The double layer jacket will roll into the gap between the pipe 9 and the sealing body 19, and in fact the jacket 22 behaves like a caterpillar belt rolling onto the sealing body 19. The total thickness of the material of the gasket and the compression thereof in the sealing gap between the pipe 9 and the socket 14, will then increase corresponding to twice the thickness of the jacket 22.

By appropriate selection of the length of the walls of the jacket 22 viewed in cross-section and of the length of the assembly movement, buffer layers 30 and 31 can result which extend outside and inside the sealing area 32 defined by the sealing body 19 as shown in Figure 3.

In addition, with this embodiment it is possible to avoid such buffer layers, if desirable, by making said walls sufficiently short to prevent the jacket 22 from rolling beyond the sealing body 19. The jacket 22 will then be positioned only across the sealing width 32 provided by the section of the first portion having the greatest thickness, and such a gasket can be used also with pipes providing too narrow or too short a gap axially inside the sealing body to accomodate said jacket. Such pipes and such gaskets are illustrated in Figure 4.

Whereas in Figures 2 to 4 a hollow jacket performing a rolling movement has been shown in connection with a Z-shaped sealing body and in an embodiment intended for premounting in the socket end of the pipe, it should be understood that the invention is not limited to use with this type of sealing body and can, of course, be used in connection with any appropriate configuration of the sealing body as well as on gaskets intended for mounting on the spigot end of the pipe.

For example, a hollow jacket 22 can be used to build up an increased thickness of the type of lamellae gasket which has been discussed with reference to Figures 1a and 1b. Again, the inner surfaces of the jacket 22 when flattened will slide relative to each other, a first layer of the jacket 22 adjacent to the sealing body 19 being stationary relative to the sealing body 19, whereas the layer in contact with the spigot end will slide along the first layer, the entire jacket 22 performing a rolling movement similar to a caterpillar belt rolling into the gap between the sealing body and one of the pipes (the spigot end in the embodiment shown in Figures 1a and 1b).

**Claims**

1. A gasket having a substantially uniform cross-sectional shape and comprising elastically resilient material for sealing a gap between two elements (9, 14) having sealing surfaces which are substantially uniformly spaced, the gasket comprising a sealing body (2) adapted to be stationary with respect to one of the sealing surfaces during assembly where relative movement of the elements (9, 14) occurs in a direction substantially parallel to the sealing surfaces and transverse to the longitudinal direction of the gasket, and further comprising a hollow jacket (22) defined by a wall having reduced thickness in relation to the sealing body (2) and forming a closed cavity having lubricated surfaces, the hollow jacket (22) being connected with the forward end (A) of the sealing body and being wholly positioned in front of the sealing body in the starting position for the assembly by relative movement of the elements (9, 14), the hollow jacket being adapted at the assembly to roll from the position in front of the sealing body in a manner similar to a caterpillar belt to a position in which the hollow jacket is at least partially positioned between the sealing body and the opposite sealing surface, **characterized** in that the hollow jacket (22) defines an empty cavity which is adapted to be flattened with two opposite inner surfaces of said wall contacting each other essentially along their entire length during assembly and in the assembled position in which the jacket is at least partially positioned between the sealing body and the opposite sealing surface.

2. A gasket according to claim 1, **characterized** in that the cross-sectional shape of the hollow jacket (22) is adapted to provide that the jacket will be carried along by a sealing surface during assembly.

3. A gasket according to claim 1 or 2, **character-**

**ized** in that the circumference of the cross-section of the hollow jacket (22) has a restricted length so as to prevent any substantial part of said jacket (22) from rolling past the said region of the sealing body (2) during assembly of the elements (9,14).

4. A gasket according to claim 1 or 2, **characterized** in that the circumference of the cross-section of the hollow jacket (22) is of sufficient length either to leave a substantial part of said jacket (22) in front of the said region of the sealing body (2) when the elements (9, 14) are assembled, or to permit a substantial part of said jacket (22) to roll past the cross-section of the sealing body (2), thereby to form a supporting layer in front of an/or beyond the cross-section of the sealing body (2), said supporting layer preventing contact between the elements (9, 14) when subjected to transverse forces.

5. A gasket according to any of the preceiding claims, **characterized** in that the gasket is annular and has a diameter adapted to fit into annular, generally coaxial sealing surfaces of two pipe elements (9, 14)

6. A gasket according to claim 5, **characterized** in that said pipe elements (9, 14) have a spigot end and a socket end having exterior and interior sealing surfaces, respectively.

**Revendications**

1. Joint ayant en section transversale une forme sensiblement uniforme et constitué d'une matière élastique pour rendre étanche un intervalle entre deux éléments (9, 14) ayant des surfaces d'étanchéité d'écartement sensiblement uniforme, ce joint comprenant un corps (2) d'étanchéité prévu pour être fixe par rapport à l'une des surfaces d'étanchéité pendant l'emboîtement dans lequel le déplacement relatif des éléments (9, 14) se produit dans un sens sensiblement parallèle aux surfaces d'étanchéité et transversalement au sens longitudinal du joint, et comprenant en outre un manchon creux (22) délimité par une paroi ayant une épaisseur réduite par rapport au corps (2) d'étanchéité et constituant une cavité fermée dont les surfaces sont lubrifiées, le manchon creux (22) étant relié à l'extrémité avant (A) du corps d'étanchéité et étant entièrement placé en avant du corps d'étanchéité dans la position de départ en vue de l'emboîtement par déplacement relatif des éléments (9, 14), le manchon creux étant prévu à l'emboîtement pour rouler de la même manière qu'une courroie sans fin à patins, de la position en avant du corps d'étanchéité à une position dans laquelle le manchon creux est du moins partiellement placé entre le corps d'étanchéité et la surface opposée d'étanchéité, caractérisé en ce que le manchon creux (22) constitue une cavité vide qui est prévue pour s'aplatir, deux surfaces opposées intérieures de cette paroi étant en contact l'une avec l'autre sensiblement sur toute leur longueur pendant l'emboîtement et en position emboîtée dans laquelle le manchon est du moins partiellement placé entre le corps d'étanchéité et la surface opposée d'étanchéité.

2. Joint suivant la revendication 1, caractérisé en ce que la forme du manchon creux (22) en coupe transversale est prévue pour faire en sorte que le manchon soit entraîné par une surface d'étanchéité pendant l'emboîtement.

3. Joint suivant la revendication 1 ou 2, caractérisé en ce que le pourtour de la coupe transversale du manchon creux (22) a une longueur limitée afin d'empêcher qu'une partie sensible du manchon (22) route au-delà de cette région du corps (2) d'étanchéité pendant l'emboîtement des éléments (9, 14).

4. Joint suivant la revendication 1 ou 2, caractérisé en ce que le pourtour de la coupe transversale du manchon creux (22) a une longueur suffisante soit pour laisser une partie sensible de ce manchon (22) en avant de cette région du corps (2) d'étanchéité lorsque les éléments (9, 14) sont emboîtés, ou pour permettre à une partie sensible de ce manchon (22) de rouler au-delà de la coupe transversale du corps (2) d'étanchéité, de manière à former une couche de support en avant ou au-delà de la coupe transversale du corps (2) d'étanchéité, cette couche de support empêchant tout contact entre les éléments (9, 14) lorsqu'ils sont soumis à des forces transversales.

5. Joint suivant l'une quelconque des revendications précédentes, caractérisé en ce que ce joint est annulaire et a un diamètre prévu pour s'adapter entre les surfaces d'étanchéité annulaires, coaxiales dans leur ensemble, de deux éléments (9, 14) de tuyaux.

6. Joint suivant la revendication 5, caractérisé en ce que ces éléments (9, 14) de tuyau comportent un bout mâle et une extrémité formant collet d'emboîtement présentant des surfaces respectivement extérieures et intérieures d'étanchéité.

## Patentansprüche

1. Dichtung, die eine im wesentlichen gleichförmige Querschnittsform hat und elastisch nachgiebiges Material zum Abdichten eines Zwischenraumes zwischen zwei Elementen (9, 14) aufweist, die Dichtflächen aufweisen, die im wesentlichen gleichförmigen Abstand voneinander haben, wobei die Dichtung einen Dichtungshauptteil (2), der dazu ausgebildet ist, während der Montage, bei der eine Relativbewegung der Elemente (9, 14) in einer Richtung im wesentlichen parallel zu den Dichtflächen und quer zur Längsrichtung der Dichtung stattfindet, in bezug auf eine der Dichtflächen feststehen, und weiter eine hohle Umhüllung (22) aufweist, die durch eine Wandung gebildet wird, die im Vergleich zum Dichtungshauptteil (2) eine geringere Dicke hat und einen geschlossenen Hohlraum mit geschmierten Oberflächen bildet, wobei die hohle Umhüllung (22) mit dem vorderen Ende (A) des Dichtungshauptteiles verbunden und in der Anfangsstellung für die Montage durch Relativbewegung der Elemente (9, 14) insgesamt vor dem Dichtungshauptteil angeordnet ist, wobei die hohle Umhüllung dazu ausgebildet ist, bei der Montage von der Stellung vor dem Dichtungshauptteil in ähnlicher Weise wie eine Gleiskette oder Raupenschlepperkette sich in eine Stellung zu wälzen, in der die hohle Umhüllung wenigstens teilweise zwischen dem Dichtungshauptteil und der gegenüberliegenden Dichtfläche angeordnet ist, dadurch gekennzeichnet, daß die hohle Umhüllung (22) einen leeren Hohlraum begrenzt, der flach gemacht werden kann, so daß sich zwei gegenüberstehende Oberflächen der Wandung im wesentlichen entlang ihrer ganzen Länge während der Montage und in der montierten Stellung berühren, in der die Umhüllung wenigstens teilweise zwischen dem Dichtungshauptteil und der gegenüberliegenden Dichtfläche angeordnet ist.

2. Dichtung nach Anspruch 1, dadurch gekennzeichnet, daß die Querschnittsform der hohlen Umhüllung (22) so ausgebildet ist, daß die Umhüllung durch eine Dichtfläche während der Montage mitbewegt wird.

3. Dichtung nach Anspruch 1 oder 2, dadurch gekennzeichnet, daß der Umfang des Querschnitts der hohlen Umhüllung (22) eine begrenzte Länge hat, so daß verhindert wird, daß sich ein wesentlicher Teil der Umhüllung (22) über den Hauptbereich des Dichtkörpers (2) hinaus während der Montage der Elemente (9, 14) wälzt.

4. Dichtung nach Anspruch 1 oder 2, dadurch gekennzeichnet, daß der Umfang des Querschnitts der hohlen Umhüllung (22) von ausreichender Länge ist, um entweder einen wesentlichen Teil der Umhüllung (22) vor dem Bereich des Dichtungshauptteils (2) zu belassen, wenn die Elemente (9, 14) montiert sind, oder um es einem wesentlichen Teil der Umhüllung (22) zu ermöglichen, sich an dem Querschnitt des Dichtungshauptteiles (2) vorbeizuwälzen, um dadurch eine Stützschicht vor und/oder hinter dem Querschnitt des Dichtungshauptteils (2) zu bilden, wobei die Stützschicht Berührung zwischen den Elementen (9, 14) verhindert, wenn diese Querkräften ausgesetzt sind.

5. Dichtung nach einem der vorangehenden Ansprüche, dadurch gekennzeichnet, daß die Dichtung ringförmig ist und einen Durchmesser aufweist, der so ausgebildet ist, daß sie in ringförmige allgemein koaxiale Dichtflächen von zwei Rohrelementen (9, 14) hineinpaßt.

6. Dichtung nach Anspruch 5, dadurch gekennzeichnet, daß die Rohrelemente (9, 14) ein Spitzende und ein Muffenende mit äußeren bzw. inneren Dichtflächen aufweisen.

Fig.1a.

Fig.1b.

Fig.2.

Fig.3.

Fig.4.